# DEMANDE DE BREVET EUROPEEN

(11) **EP 0 559 544 A1**
(43) Date de publication de la demande: **08.09.1993**
(21) Numéro de dépôt: 93400524.0
(22) Date de dépôt: 02.03.1993
(51) Int. Cl.: A21D 2/18, A21D 2/26, A23L 1/0522, A23L 1/105, A21D 13/00

(54) **Additifs pour farines et pour préparations alimentaires à base de farine**

(30) Priorité: 02.03.1992 FR 9202455
(71) Demandeur: FRANCE- FARINE, F-35330 Maure-de-Bretagne (FR)
(72) Inventeur: Bouisset, Marc, F-75015 Paris (FR); Briant, Jean Luc, F-13012 Marseille (FR)
(74) Mandataire: Orès, Bernard

(57) **Abrégé**

L'Invention est relative à des additifs pour farines ou pour préparations alimentaires à base de farine, caractérisés en ce qu'ils sont constitués par un mélange comprenant de l'amidon ayant subi un traitement de prégélatinisation et du gluten dépolymérisé par hydrolyse ménagée, éventuellement associés à un excipient.

L'Invention englobe également des farines comprenant lesdits additifs.

## Description

La présente Invention est relative à des additifs pour farines, en particulier pour farines destinées à une utilisation ménagère de grande consommation, ou pour préparations alimentaires à base de farine.

Le but de la présente Invention est l'obtention de farines dont les qualités de mise en oeuvre, en particulier pour la patisserie, ainsi que les résultats sont améliorés de façon notable par rapport aux farines obtenues par des procédés classiques.

Dans ce but, les Inventeurs ont mis au point un additif pour farine, obtenu à partir de fractions des composants naturels de la farine.

La présente Invention a pour objet un additif pour farines, ou pour préparations alimentaires à base de farine, caractérisé en ce qu'il est constitué par un mélange comprenant de l'amidon ayant subi un traitement de prégélatinisation et du gluten dépolymérisé par hydrolyse ménagée, éventuellement associés à un excipient.

On entend par prégélatinisation de l'amidon, un traitement ayant pour but de provoquer un relâchement des interactions entre les molécules d'amylose et d'amylopectine qui constituent les grains d'amidon. Un tel effet est obtenu par exemple lors d'un traitement par la chaleur en présence d'eau ou de vapeur d'eau. Dans de telles conditions, en effet, lorsque la température atteint une valeur d'environ 60 à 65°C, on observe une dilatation des grains d'amidon. Des molécules d'eau pénètrent dans les mailles du réseau formé par les chaînes d'amylose et d'amylopectine, et se complexent avec les groupes OH libres, ce qui accentue le phénomène de gonflement. Ceci aboutit, au fur et à mesure que la température s'élève et que le traitement se prolonge, au déroulement total des chaînes d'amylose et d'amylopectine, ce qui entraîne la gélification de la préparation d'amidon.

Avantageusement, l'amidon présent dans l'additif conforme à l'Invention est apporté sous forme d'une farine riche en amidon ; on entend par farine riche en amidon, une farine comprenant plus de 75% d'amidon (plus de 85% d'amidon dosé sur matière sèche).

Pour l'obtention de l'additif conforme à l'Invention, l'amidon (pur ou contenu dans une farine riche en amidon) ne doit pas parvenir au stade de gélatinisation totale, où les grains perdent leur individualité. On peut contrôler aisément que l'on a atteint l'état de prégélatinisation souhaité en observant au microscope un échantillon de farine ou d'amidon traité : les grains d'amidon doivent rester individualisés et ceux qui sont prégélatinisés montrent un accroissement significatif de leur taille, témoin du gonflement.

Le degré de prégélatinisation peut également être contrôlé par observation au microscope sous lumière polarisée ; dans ce cas les grains d'amidon non prégélatinisés présentent une croix de biréfringence caractéristique, qui disparaît lors de la prégélatinisation.

Au moins 5% et de préférence, entre 10 et 40% des grains de l'amidon entrant dans la composition de l'additif conforme à l'Invention sont à l'état prégélatinisé.

Selon un mode de réalisation préféré de l'additif conforme à l'Invention, ledit additif comprend 1 à 20 parties d'amidon prégélatinisé, pour une partie de gluten hydrolysé.

L'additif conforme à l'invention peut être utilisé en association avec différents ingrédients d'usage courant dans les industries agro-alimentaires, par exemple des produits agissant sur l'équilibre d'oxydo-réduction des protéines de la farine, tel que l'acide ascorbique, le glutathion, la cystéine, purs ou composants de produits riches en ces constituants, et/ou des enzymes (par exemple amylase) d'origine végétale, animale, fongique ou bactérienne et/ou par tout autre ingrédient couramment utilisé (arômes, par exemple). L'additif peut en outre contenir entre 0 et 98% d'excipient.

La nature de l'excipient utilisé varie selon l'utilisation ultérieure que l'on souhaite faire de l'additif, et en particulier la nature du produit final dans lequel il sera incorporé ; de préférence, on choisira comme excipient un produit qui entre normalement en proportion relativement importante dans la composition du produit final souhaité. Par exemple, si l'additif conforme à l'Invention est destiné à une utilisation patissière, l'excipient choisi sera avantageusement une farine convenant habituellement à cette utilisation.

L'Invention a également pour objet une farine comprenant du gluten hydrolysé et de l'amidon prégélatinisé tels que définis ci-dessus, éventuellement associés à un excipient approprié, à une farine de base, qui est de préférence de la farine de blé ou d'une autre céréale, ou toute autre farine d'origine végétale.

Selon un mode de réalisation préféré d'une farine conforme à l'Invention, elle comprend entre 80 et 99,5 % environ de farine de base et, entre 0,5 et 20% de l'additif conforme à l'Invention.

Une farine conforme à l'Invention peut être obtenue de la façon suivante
- D'une part, on thermise en phase aqueuse, ou en présence de vapeur d'eau, une farine de préférence pauvre en protéines, ou de l'amidon, afin d'obtenir le gonflement et la prégélatinisation des grains d'amidon, .
   Cette étape est effectuée à une température comprise entre 45 et 90°C si l'on opère en phase aqueuse et 75 à 110°C si l'on opère en présence de vapeur d'eau.
   L'obtention de l'amidon prégélatinisé peut également résulter d'autres techniques telles que cuisson, cuisson extrusion, cuisson infrarouges, micro-ondes, ultrasons et/ou par tout autre procédé physique, chimique, par exemple la chloration, ou biologique, aboutissant à la prégélatinisation et ou à la réticulation totale ou partielle des grains d'amidon.
- D'autre part, on procède à l'hydrolyse du gluten de blé par des procédés chimiques, physiques, physico-chimiques, biologiques, ou autres de façon à obtenir une quantité importante de peptides et/ou acides aminés résiduels, témoins de la dépolymérisation des chaînes protéiques du gluten. Le nombre moyen de coupures dans les chaînes protéiques donnant naissance aux peptides et aux acides aminés représente le degré d'hydrolyse (DH) du gluten qui doit être compris entre 1 et 16%. De préférence il sera compris entre 5 et 15%.

Avantageusement, pour obtenir un DH dans la gamme de pourcentage conforme à l'Invention, on procèdera à l'hydrolyse enzymatique du gluten. De nombreuses protéases peuvent être utilisées à cet effet, par exemple la pepsine, la trypsine, la chymotrypsine, la papaïne, la bromélaïne, la subtilisine, la thermolysine, la protéase V8, etc...

On réalise ensuite un mélange homogène des deux ingrédients décrits ci-dessus. Avantageusement, ce mélange est effectué dans des proportions correspondant au rapport amidon/gluten de la farine à laquelle l'additif est destiné. Par exemple, pour une farine ménagère d'utilisation courante, ces proportions sont les suivantes : Amidon 68,5 à 75% ; sucres 1 à 1,5% ; protéines (N x 5,7) 10 à 11,5% ; matières grasses 1,5 à 5% ; cendres 0,4 à 0,6% ; humidité 13 à 16%.

Il est également avantageux, lors de cette troisième opération de disperser les deux ingrédients dans un excipient farineux (qui peut être avantageusement une petite quantité de la farine à laquelle on souhaite incorporer l'additif) afin de favoriser d'une part le mélange de ces ingrédients entre eux, et d'autre part l'incorporation au produit final de l'additif ainsi obtenu.

On incorpore alors de façon homogène le mélange obtenu à l'issue de l'étape précédente à une farine de blé, ou à une autre préparation alimentaire, dans des proportions allant de 0,1 à 100%, de préférence de 1 à 20%, suivant le résultat souhaité.

Bien entendu, une farine conforme à l'Invention peut également être obtenue en mélangeant séparément l'amidon prégélatinisé ou le gluten hydrolysé à la farine de base, et en ajoutant l'autre ingrédient au mélange obtenu.

Les additifs conformes à l'Invention intéressent non seulement les farines destinées à des utilisations ménagères, mais peuvent également être incorporés avec bénéfice dans d'autres préparations alimentaires, comme par exemple
. préparation pour desserts, gâteaux, tartes, pizzas, pains,-brioches, viennoiseries ;
. pâtes à tartes ou à pizza ;
. préparations pour sauces ;
. nourriture pour bébés contenant du gluten ;
. biscuiterie, panification fine ;
. produits extrudés céréaliers ;

et d'une façon générale, dans toutes les préparations utilisant de la farine, ainsi que dans des produits finis ou semi-finis, cuits ou crus, présentés sous forme de conserves ou semi-conserves, conservés soit à température négative, soit en froid positif ou à température ambiante.

Les farines conformes à l'Invention présentent par rapport aux farines classiques, l'avantage de simplifier la préparation et le maniement des pâtes, en particulier des pâtes à tarte et de permettre une meilleure présentation du produit après cuisson.

La présente Invention sera mieux comprise à l'aide du complément de description qui va suivre, qui se réfère à des exemples de préparation et d'utilisation d'une farine conforme à l'Invention.

Bien que la description de l'Invention, et en particulier les exemples qui vont suivre se réfèrent essentiellement à des farines de blé, il doit être bien entendu que l'Invention peut s'appliquer à des farines obtenues à partir d'autres céréales, et de manière générale à partir de toutes plantes farineuses.

### EXEMPLE 1 Obtention d'une farine conforme à l'invention (type 45)

Une Farine de type 45 a été obtenue en mélangeant les composants suivants
. **COMPOSANT A** Farine de blé type 45 issue de la mouture de blé sain, loyal et marchand, ne contenant pas les variétés Clément et Maris-Husmann.

| Caractéristiques alvéographiques | |
|---|---|
| W | 200/350 |
| P/L | 0,8 à 1,5 |
| Hagberg | > 300 secondes |
| Cendres | < 0,5 % |
| Protéines (Nx5,7) | 9,5 à 10,5 |

. **COMPOSANT B : Amidon prégélatinisé**
B.1. - MATIERES PREMIERES :
   Le composant B peut être obtenu à partir de l'une des matières premières suivantes :
   B.1.1. - Amidon obtenu par lixivation du produit de mouture de blé humide, puis traité thermiquement et séché.
   B.1.2. - Farine turbo séparée
      Une farine de blé provenant de mouture de blé est broyée de façon à obtenir une poudre ayant des particules dont le diamètre est inférieur à 40 µ. Cette farine est ensuite appauvrie en protéines par turbo-séparation : pour cela, on alimente la farine broyée sur un sélecteur (par exemple du type fabriqué par ALPINE, le "ZIRCOPLEX") ; on obtient à la suite de cette séparation une fraction ayant les caractéristiques suivantes, dosées telles que sur le produit pulvérulent (contenant environ 10% d'humidité)
      - Protéines 4,5 à 5,5%
      - Amidon 75 à 85%
      et d'un diamètre de particules compris entre 17 et 40 µm.
   B.1.3. - Farines du type du composant A
B.2. - PROCEDE

La prégélatinisation qui est effectuée dans un mélangeur double enveloppe et s'opère en 3 phases successives.
Phase 1 : Introduction et homogénéisation en présence d'eau, d'une matière première telle que définie ci-dessus jusqu'à l'obtention d'un taux de 30% d'humidité (taux d'humidité pouvant varier de 20 à 40%).
Phase 2 : La matière première humidifiée obtenue à l'issue de la phase 1 est introduite dans un mélangeur double enveloppe et l'on procède à l'injection de vapeur à 87,5 °C pendant 15 mn. Suivant le degré de gonflement ou de prégélatinisation recherché, les températures de traitement peuvent varier de 75 à 110°C et les durées de traitement de 5 à 45 mn.
Phase 3 : On procéde au séchage jusqu'à une humidité résiduelle de 14%, de préférence dans un échangeur double enveloppe.

Un autre procédé de prégélatinisation peut être mis en oeuvre par passage d'une suspension d'amidon sur un cylindre chauffant à surface raclée, ou sur lit fluidisé.
. **COMPOSANT C**
Ce composant est constitué par du gluten dépolymérisé par traitement enzymatique, jusqu'à obtention d'un DH de 5, 8%, fourni par la Société ARD/CHAMTOR. On peut également utiliser un hydrolysat de gluten du type DOREL 8261 ou DOLYS, commercialisé(s) par la société QUEST, ou de l'AMYPRO SWP commercialisé par la Société AMYLUM.

Des farines conformes à l'Invention sont obtenues par mélange des composants A, B et C.

### DEMONSTRATION DES PROPRIETES DES FARINES CONFORMES A L'INVENTION

### EXEMPLE 2 : Mesures effectuées en laboratoire

La caractérisation des propriétés de farines conformes à l'Invention a été réalisée à l'aide de tests rhéologiques, ainsi que par des essais sur la mesure du collant et sur le comportement au laminage et à la cuisson de pâtes simples préparées à partir de farines comprenant des quantités variables de (B+C).

L'additif (B+C) conforme à l'Invention a été employé en addition à une farine de base correspondant au composant A décrit à l'Exemple 1 ; l'additif (B+C) est constitué par un mélange du composant B.1.2. de de l'Exemple 1, prégélatinisé selon le procédé décrit en B.2, et du composant C de l'exemple 1. Ce mélange a été utilisé dans le rapport B/C = 1/10.

Les concentrations indiquées dans la description ci-après sont exprimées en pour cent en poids du mélange (B+C) additionné à la farine de base A.

Le mélange (B+C) a été dispersé dans la farine A avant essai. L'ensemble a été tamisé 3 fois de suite afin d'assurer une dispersion homogène du mélange (B+C) dans la masse de la farine. Les essais ont ensuite été réalisés en prélevant la masse de mélange A + (B+C) nécessaire.

### 1 - Essais rhéologiques

Les tests rhéologiques mis en oeuvre sont
. l'essai à l'alvéographe CHOPIN
. l'essai au farinographe BRABENDER.

Les essais ont été conduits conformément aux protocoles standards de ces deux tests, tels que définis par la Norme NF ISO 5530-4 [Norme internationale ISO 5530-4 (1992)] pour les essais à l'alvéographe CHOPIN, et par la Norme NF ISO 5530-1 [Norme Internationale ISO 5530-1 (1989)] pour les essais au farinographe.
- essais à teneur en eau constante et à masse de matière première constante pour les essais à l'alvéographe CHOPIN.
- essai à masse de matière première variable et à consistance constance pour les essais au farinographe.

### 1.1 - RESULTATS DES ESSAIS ALVEOGRAPHIQUES

Les essais alvéographiques ont été réalisés en maintenant constante (250 grammes) la matière incorporée dans le pétrin de l'alvéographe.

Le mélange (B+C) a été ajouté à la farine A à la concentration désirée. L'ensemble a été mélangé de façon à disperser l'additif (B+C) dans la masse de la farine. 250 grammes de chaque mélange A + (B+C) ont été repris pour la réalisation des essais.

A titre de comparaison, les essais ont également été effectués avec les mélanges A + B et A + C, ainsi qu'avec des farines de base (A₁, A₂ et A₃) présentant des caractéristiques différentes.

Les résultats sont exprimés dans les Tableaux I et II ci-dessous. Dans ces tableaux :
. a représente le pourcentage en poids de chacun des additifs B, C ou (B+C).
. Les nombres entre parenthèses représentent la variation relative (en % par rapport au témoin constitué par la farine A), de chacun des paramètres considérés.

Les paramètres considérés sont :
- la dureté (W) = force nécessaire pour obtenir une déformation donnée de la pâte sous l'action d'une pression d'air ;
- la ténacité des pâtes (P) ;
- l'extensibilité (indice de gonflement): (G);
- le rapport P/L.

**TABLEAU I**

| Farine | a(%) | W | G | P | P/L | |
|---|---|---|---|---|---|---|
| A₁ | 0 | 277 | 18,9 | 101,0 | 1,40 | |
| A₁ + B | 0,5 | 269(-2,9) | 19,1(+1,1) | 103,4(+2,4) | 1,40(0) | |
| | 1 | 283(+2,2) | 19,5(+3,2) | 103,4(+2,4) | 1,34(-4,3) | |
| | 2 | 253(-8,7) | 18,9(0) | 99,0(-2) | 1,38(-1,4) | |
| A₁ + C | 0,1 | 266(-4) | 19,9(+5,3) | 96,8(-4,2) | 1,21(-13,6) | |
| | 0,2 | 239(-13,7) | 20,5(+8,5) | 86,0(-14,9) | 1,01(-27,9) | |
| | 0,3 | 217(-21,7) | 19,8(+7,4) | 85,0(-11,9) | 1,08(-23,6) | |
| A₁ + (B+C) | 0,5 | 287(+3,6) | 20,9(+10,6) | 92,0(-8,5) | 1,05(-25) | |
| | 1 | 250(-9,7) | 20,5(+8,5) | 83,0(-17,2) | 0,98(-30) | |
| | 1,5 | 249(-10,1) | 21,7(+14,8) | 78,1(-22,6) | 0,82(-43,6) | |
| | 2,5 | 239(-15,9) | 22,0(+16,4) | 73,7(-27,0) | 0,76(-45,7) | |

**TABLEAU II**

| Farine | a(%) | W | G | P | P/L | |
|---|---|---|---|---|---|---|
| A₂ | 0 | 323 | 22,2 | 100,1 | 1,01 | |
| A₂ + (B+C) | 0,5 | 278(-13,9) | 22,2(0) | 84,7(-15,4) | 0,86(-14,9) | |
| | 1 | 272(-15,8) | 23,2(+4,5) | 78,7(-21,4) | 0,73(-27,7) | |
| | 1,5 | 245(-24,1) | 22,6(+1,8) | 74,3(-25,8) | 0,72(-28,7) | |
| A₃ | 0 | 304 | 22,4 | 93,5 | 0,93 | |
| A₃ + (B+C) | 0,5 | 281(-6,8) | 22,6(+0,9) | 81,4(-12,9) | 0,79(-15,1) | |
| | 1 | 273(-10,2) | 22,5(+0,5) | 78,5(-16) | 0,77(-17,2) | |
| | 1,5 | 249(-18,1) | 22,3(-0,4) | 74,8(-20) | 0,75(-19,3) | |

### - Dureté (W)

L'utilisation du mélange (B + C) aux concentrations supérieurs à 1% conduit à une diminution faible mais significative de la dureté des pâtes. Cette diminution ne semble toutefois pas significativement différente de celle qui est observée lorsque l'hydrolysat de gluten est utilisé seul à des concentrations comparables.

### - Ténacité des pâtes (P)

Les tableaux I et II montrent que l'incorporation de doses croissantes d'additif conforme à l'Invention à la farine de blé conduit à une diminution rapide de la ténacité des pâtes. La diminution relative observée est plus de deux fois supérieure à celle qui résulterait de l'addition des effets du gluten hydrolysé et de l'amidon prégélatinisé à concentration équivalente. L'intensité de l'effet dépend de la farine de base utilisée.

Dans la pratique, la diminution de la ténacité alvéographique se traduit par une amélioration de la facilité à former les pâtes au cours du pétrissage. Les pâtes obtenues sont alors souples et plus faciles à abaisser lors du laminage.

### - Gonflement (G)

Pour la farine A₁, le gonflement est augmenté de façon faible, mais significative pour toutes les concentrations de (B + C) utilisées.

En revanche, l'incorporation du mélange (B + C) dans les farines A₂ et A₃ pour lesquelles les valeurs de G sont au départ élevées ne modifie pas significativement peu le gonflement alvéographique des pâtes. Il apparaît également que l'effet de l'additif conforme à l'Invention dépend du type de farine utilisée comme support.

### - Rapport P/L

La mise en oeuvre du mélange (B+C) conduit à une diminution rapide du rapport P/L, quelle que soit la farine mise en oeuvre. Cette diminution semble d'autant plus importante que la valeur de P/L dans la farine de base est plus élevée. Elle est également plus importante que celle à laquelle on pourrait s'attendre en considérant les effets des constituants B et C pris séparément.

Cette caractéristique est particulièrement avantageuse, dans la mesure où une valeur de P/L proche de 0,50 est en règle générale considérée comme très favorable à la réalisation des pâtes laminées.

### 1.2 - RESULTATS FARINOGRAPHIQUES

Les essais farinographiques ont été réalisés en ajoutant le mélange (B+C) à la masse (300 grammes) de farine nécessaire à la réalisation de l'essai standard. La masse totale de produit mise en oeuvre pour ces essais varie donc avec la concentration de mélange (B+C).

Les résultats sont donnés dans le tableau III ci-dessous :

**TABLEAU III**

| (B+C) ajouté (%) | 0 % | 1,5 % | 2 % | 3 % |
|---|---|---|---|---|
| Masse d'eau ajoutée pour obtenir une consistance de 500 UB (ml) | 168,6 | 169,8 | 170 | 171,6 |
| Hydratation corrigée (%) | 58 | 60 | 61 | 62 |
| Temps de formation de la pâte (secondes) | 105 | 120 | 105 | 110 |
| Affaiblissement (UB) | 60 | 100 | 110 | 100 |

### Hydratation des pâtes

L'augmentation de la dose de mélange (B+C) conduit à un accroissement de l'hydratation des pâtes. Les variations enregistrées sont significatives dès 1,5% de mélange (B+C) ajouté. Il apparaît donc que l'emploi d'additif conforme à l'Invention permet d'améliorer le rendement en pâte d'une farine.

### Temps de formation de la pâte

La variation de la durée de formation des pâtes en présence de B+C est de 15 secondes au maximum par rapport à la farine de base. Cet écart n'est pas significatif.

### Affaiblissement

L'emploi du mélange (B+C) se traduit par une augmentation de l'affaiblissement des pâtes. Cet effet est perceptible dès 1,5% de mélange (B+C) ajouté.

Cette caractéristique est particulièrement intéressante pour la fabrication de pâtes artisanales réalisées à la main, car elle se traduit par un assouplissement rapide des pâtes au cours du pétrissage. Celles ci sont plus faciles à former par l'opérateur.

### 2) Influence de l'additif conforme à l'Invention sur le comportement au laminage des pâtes, et sur les caractéristiques physiques de produits feuilletés

Parmi les différentes pâtes simples de la pâtisserie, la pâte feuilletée est certainement celle qui est le plus sensible à des variations de la qualité de la farine utilisée. Le choix de cette formulation permet donc de mettre parfaitement en évidence les effets de l'additif conforme à l'Invention.

Des pâtes feuilletées à base d'une farine A à laquelle a été ajouté 1% ou 2% de mélange (B+C) a été préparée selon la méthode classique.

La cuisson s'est déroulé en deux étapes
- une première série de produits a été cuite 30 minutes après le dernier tour au laminoir ;
- le reste de la pâte a été conservé à 4°C pendant 24 heures ; l'abaisse de cette pâte à l'épaisseur voulue ainsi que le détaillage des produits ont été réalisés immédiatement avant emploi.

La cuisson a été réalisée sur des formes de vol au vent. Des cercles de 10 cm ont été découpés dans la pâte. Deux cercles ont été superposés avant cuisson. La cuisson a été effectuée dans un four à sole fixe.

Les dimensions des produits ont été mesurées après cuisson.

Les tableaux IVa et IVb ci-après récapitulent les résultats de ces mesures :
Tableau IVa : Attente avant cuisson 30 minutes
Tableau IVb : Attente avant cuisson 48 heures.

**TABLEAU IVa**

| (B+C) (%) | | Long. (cm) | Larg. (cm) | Epais. (cm) | Surf. (cm²) | L/1 | Etalement (%) |
|---|---|---|---|---|---|---|---|
| 0% | Moy. | 9,43 | 8,84 | 4,22 | 261,62 | 1,07 | -16,68 |
| 1% | Moy. | 9,35 | 9,07 | 4,00 | 263,05 | 1,03 | -15,20 |
| 2% | Moy. | 9,41 | 9,03 | 4,11 | 266,81 | 1,04 | -15,03 |

**TABLEAU IVb**

| (B+C) % | | Long. (cm) | Larg. (cm) | Epais. (cm) | Surf. (cm²) | L/1 | Etalement (%) |
|---|---|---|---|---|---|---|---|
| Témoin | Moy. | 9,27 | 9,05 | 3,46 | 263,28 | 1,02 | -16,15 |
| 1% | Moy. | 9,74 | 9,41 | 3,33 | 287,49 | 1,04 | -8,44 |
| 2% | Moy. | 9,68 | 9,32 | 3,35 | 283,28 | 1,04 | -9,78 |

Ces résultats montrent que lorsque les produits sont cuits dans la demi-heure suivant le laminage, le mélange (B+C) permet de réduire notablement la déformation (ovalisation).

Après un temps de repos plus long (48 heures), le mélange (B+C) permet d'améliorer significativement les paramètres dimensionnels des-vol-au-vents. La longueur et la largeur des produits sont accrues, et la surface occupée par le produit est donc améliorée.

### EXEMPLE 3 : Avantages constatés lors de l'utilisation d'une farine conforme à l'Invention.

Des farines conformes à l'invention ont été testées dans des conditions correspondant aux utilisations réelles préconisées, aussi bien à l'échelon industriel qu'à l'échelon artisanal, ou à l'utilisation ménagère. Les observations faites au cours de ces tests d'utilisation confirment les propriétés des farines conformes à l'invention mises en évidence par les essais en laboratoire décrits à l'exemple 2 ci-dessus.

Les avantages conférés par les farines conformes à l'invention s'observent tant lors du travail de la pâte que dans les résultats obtenus après cuisson.

### A) Améliorations observées dans la mise en oeuvre de la pâte

1. Accroissement de la facilité et de la rapidité de mélange des divers ingrédients jusqu'à l'obtention d'une pâte homogène. La manipulation est notablement écourtée.
2. Amélioration de l'homogénéité de la pâte obtenue, cette amélioration provenant d'une répartition améliorée des différents composants et en particulier de la matière grasse et de l'eau.
3. Accroissement de la tolérance aux écarts de dosage et en particulier aux excès et manque d'eau
4. Diminution de l'adhérence : lors du pétrissage, la pâte préparée avec une farine conforme à l'Invention colle moins aux instruments de mélange ou aux mains de la ménagère qu'une pâte préparée avec une farine classique. A l'étalement au rouleau et/ou au laminoir, le collage au support et aux instruments de travail se trouve fortement diminué.

Cet avantage permet de limiter la perte de pâte et de diminuer la quantité de farine utilisée en fleurage.
5. Tolérance accrue aux écarts de temps de repos de la pâte, cette tolérance pouvant aller dans certains cas jusqu'à la suppression totale du temps de repos.
6. Forte diminution du phénomène de croutage par dessication que l'on observe lors de repos d'une pâte préparée avec une farine classique.
7. Amélioration très importante des caractéristiques d'extensibilité de la pâte ayant pour conséquence
   - la possibilité d'obtenir lors du laminage une épaisseur plus faible de pâte ;
   - une plus grande rapidité de résultat dans l'abaisse, se traduisant notamment par une forte diminution du retreint (pâte étant moins élastique qu'une pâte obtenue avec une farine classique ) ;
   - le gain d'homogénéité, de régularité dans la structure de la pâte, permet en outre de limiter fortement le déchirement et les crevasses qui sont observés couramment sur une pâte préparée avec une farine classique.
8. Simplification des étapes de mise en oeuvre des différents composants de la recette
   - par exemple mélange de l'ensemble des ingrédients dès le début de la recette (i.e. farine + matière grasse + eau + sel, plus éventuellement oeuf et/ou sucre et/ou cacao) au lieu de fractionner ou de différer les incorporations dans le temps.
9. Meilleure conservation des caractéristiques dimensionnelles de la pâte lors des opérations de découpe ou de fonçage. Les phénomènes d'ovalisation ou de réduction de diamètre disparaissent ou sont considérablement diminués.

### B) Améliorations observées après cuisson de la pâte

Après cuisson, les pâtes préparées à partir de farine conforme à l'Invention présentent des améliorations notables de leurs caractéristiques physiques et organoleptiques, qui sont principalement dues à une meilleure régularité de cuisson.

Dans les mêmes conditions de mise en oeuvre et de cuisson, une pâte préparée à partir d'une farine conforme à l'Invention présente par rapport à une farine classique les bénéfices suivants :

### Pâtes à tartes

. Diminution de retreint, c'est-à-dire diamètre constaté du produit fini après cuisson par rapport au diamètre initial de la découpe de pâte avant cuisson ;
. Conservation après cuisson de la hauteur des bords, ce qui confère au produit fini un aspect final plus esthétique ;
. Diminution de l'ovalisation observable dans la relation entre le plus petit diamètre et le plus grand des diamètres d'un disque de pâte après cuisson ;
. A la cuisson, la pâte confectionnée avec la farine conforme à l'Invention voit son épaisseur augmenter, mais à la différence des farines classiques, plus faiblement et de manière beaucoup plus uniforme, ce qui a pour conséquence de très fortement limiter l'apparition de boursouflures même si la pâte n'a pas été piquée avant cuisson. Ainsi le recours au "piquage", ou le dépôt d'éléments de ballast avant la cuisson sur le fond de l'abaisse ne s'avère plus indispensable.
. La meilleure homogénéité de la pâte lui confère après cuisson, une bien meilleure résistance s'appliquant aussi bien au fond qu'au bord de la tarte, ce qui a pour conséquence d'éviter la rupture souvent constatée au démoulage ou lors de la découpe au niveau de la jonction bord/fond.

### Pâtes feuilletées

la formulation conforme à l'Invention, de par les caractéristiques déjà énoncées (homogénéité, extensibilité) améliore de façon notable la séparation des feuilles de détrempe (farine + eau) des couches de matières grasses, garantissant ainsi une meilleure qualité du feuilletage.

### Autres pâtes et en particulier pâtes jaunes (génoises, cakes....)

la formulation conforme à l'Invention permet une meilleure homogénéisation des ingrédients. Cependant, après cuisson, les effets améliorateurs sont présents mais sans incidence notable sur la qualité des produits.

Ainsi que cela ressort de ce qui précède, l'Invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée de la présente Invention.

## Revendications

**1)** Additif pour préparations alimentaires, caractérisé en ce qu'il est constitué par un mélange comprenant de l'amidon ayant subi un traitement de prégélatinisation et du gluten dépolymérisé par hydrolyse ménagée, éventuellement associés à un excipient.

**2)** Additif selon la Revendication 1, caractérisé en ce que l'amidon présent est apporté sous forme d'une farine riche en amidon, laquelle farine a subi un traitement de prégélatinisation..

**3)** Additif selon l'une quelconque des Revendications 1 ou 2, caractérisé en ce que au moins 5% des grains de l'amidon qui entrent dans sa composition sont à l'état prégélatinisé.

**4)** Additif selon la Revendication 3, caractérisé en ce que entre 10% et 40% des grains de l'amidon qui entrent dans sa composition sont à l'état prégélatinisé.

**5)** Additif selon l'une quelconque des Revendications 1 à 4, caractérisé en ce que le degré d'hydrolyse du gluten est compris entre 1% et 16%.

**6)** Additif selon la Revendication 5, caractérisé en ce que le degré d'hydrolyse du gluten est compris entre 5% et 15%.

**7)** Additif selon l'une quelconque des Revendications 1 à 4, caractérisé en ce qu'il comprend 1 à 20 parties d'amidon prégélatinisé, pour une partie de gluten hydrolysé.

**8)** Additif selon l'une quelconque des Revendications 1 à 7, caractérisé en ce qu'il comprend entre 0% et 98% d'excipient.

**9)** Farine caractérisée en ce qu'elle comprend de l'amidon ayant subi un traitement de prégélatinisation et du gluten dépolymérisé par hydrolyse ménagée.

**10)** Farine selon la Revendication 9, caractérisée en ce qu'elle comprend entre 80% et 99,5% environ de farine, et entre 0,5% et 20% d'un additif selon l'une quelconque des Revendications 1 à 8

**11)** Préparation alimentaire, caractérisée en ce qu'elle comprend un additif selon une quelconque des revendications 1 à 8.

**12)** Préparation alimentaire selon la revendication 11, caractérisée en ce qu'il s'agit d'une pâte à tarte ou d'une pâte à pizza.
